# FASCICULE DE BREVET EUROPEEN

(11) **EP 0 437 998 B1**
(45) Date de publication et mention de la délivrance du brevet: **03.11.1993**
(21) Numéro de dépôt: 90403676.1
(22) Date de dépôt: 19.12.1990
(51) Int. Cl.: B23K 26/00, F22B 37/00

(54) **Tête de travail au laser dans un tube**
Laser-Arbeitskopf innerhalb eines Rohres
Laser working head within a tube

(30) Priorité: 28.12.1989 FR 8917379
(43) Date de publication de la demande: 24.07.1991
(73) Titulaire: FRAMATOME, 92400 Courbevoie (FR)
(72) Inventeur: Boudot, Cécile, F-71100 Chalon S/Saone (FR); Griffaton, Jacques, F-71100 Chalon S/Saone (FR)
(74) Mandataire: Jacobson, Claude

(56) Documents cités:
- EP-A- 0 251 846
- EP-A- 0 300 458
- US-A- 4 510 372
- US-A- 4 694 137

## Description

La présente invention est relative à un procédé de travail au laser dans un tube selon le préambule de la revendication 1, ainsi qu'à une tête de travail selon le préambule de la revendication 4 (voir EP-A-300 458). Elle s'applique notamment au soudage au laser dans des tubes de faible diamètre tels que les tubes d'eau primaire des générateurs de vapeur des réacteurs nucléaires à eau pressurisée.

Il est de pratique courante d'envoyer un gaz dans la zone de travail, à travers la tête de travail au laser, afin, notamment, de protéger le bain de fusion de l'oxydation. On peut pour cela faire sortir le gaz de la tête de travail par la fenêtre de sortie du faisceau laser, soit à partir de l'espace adjacent au miroir de renvoi du faisceau laser, comme décrit par exemple dans le brevet FR-B-2649030 (publié le 4.1.1991) au nom de la Demanderesse, soit à partir d'un conduit axial qui débouche vers l'aval dans cette fenêtre (EP-A-300 458).

L'invention a pour but d'augmenter la qualité, la fiabilité et la reproductibilité des soudures et de mieux protéger la tête de travail contre l'échauffement provoqué par le bain de fusion et contre les projections venant de ce bain.

A cet effet, l'invention a pour objet un procédé de travail au laser dans un tube, du type dans lequel on envoie un gaz dans la zone de travail à travers la tête de travail, caractérisé en ce qu'on crée, dans la région de la zone de travail, un matelas gazeux dont l'épaisseur est supérieure à l'intervalle qui existe entre la tête de travail et le tube en dehors de cette zone.

De préférence, on fait parvenir le gaz dans la zone de travail suivant au moins deux courants provenant de points situés de part et d'autre de cette zone et convergeant vers elle.

L'invention a également pour objet une tête de travail au laser dans un tube qui est particulièrement adaptée pour la mise en oeuvre de ce procédé. Cette tête de travail, du type comprenant des moyens pour véhiculer un flux de gaz jusque dans la zone de travail, est caractérisée en ce que l'enveloppe extérieure de la tête présente un décrochement dans la région de la fenêtre de sortie du faisceau laser.

Suivant des caractéristiques avantageuses:
- lesdits moyens comprennent au moins deux orifices de sortie situés de part et d'autre de la fenêtre de sortie du faisceau laser et orientés vers ladite zone;
- la tête de travail comporte une double enveloppe qui définit un intervalle annulaire continu s'étendant en amont et en aval de ladite fenêtre, lesdits orifices communiquant avec cet intervalle annulaire, et des moyens d'alimentation en gaz de l'intervalle annulaire;
- la tête de travail comporte des moyens pour véhiculer un autre flux de gaz jusqu'au miroir de renvoi du faisceau laser et à travers ladite fenêtre.

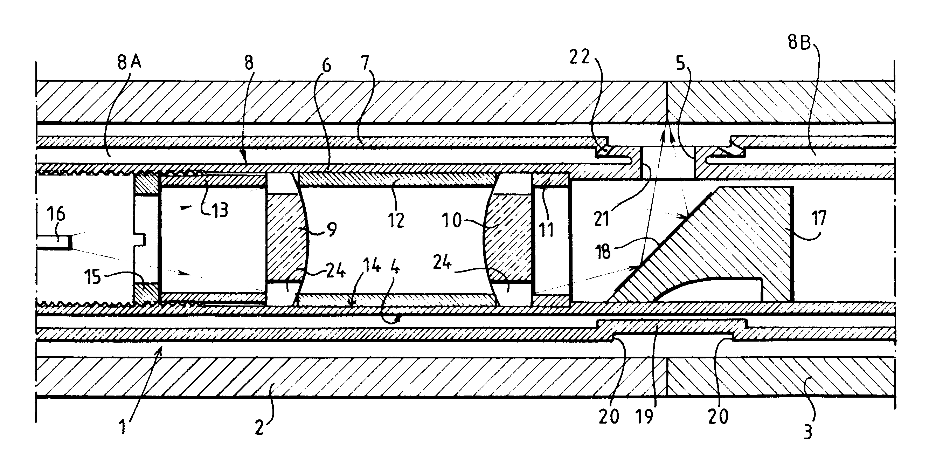

Un exemple de mise en oeuvre de l'invention va maintenant être décrit en regard du dessin annexé, sur lequel la Figure unique représente en coupe longitudinale une partie d'une tête de travail au laser conforme à l'invention.

La tête de travail au laser représentée au dessin est destinée à raccorder bout-à-bout par soudage deux tubes 2 et 3 de faible diamètre. En variante, les deux tubes pourraient être emboîtés l'un dans l'autre, ou encore ils pourraient s'agir de fixer par soudage un manchon de réparation dans un tube, suivant la technique couramment utilisée pour l'entretien des tubes d'eau primaire des générateurs de vapeur des réacteurs nucléaires à eau pressurisée.

La structure générale de la tête 1 est classique et peut par exemple être celle décrite dans le brevet FR-B-264 9030 précité. On n'a représenté au dessin que la région de cette tête comportant le système optique 4 de focalisation du faisceau laser et la fenêtre 5 de sortie du faisceau laser focalisé.

Dans la région représentée, la tête 1 comprend une double enveloppe constituée d'une enveloppe intérieure 6 et d'une enveloppe extérieure 7 délimitant entre elles un espace annulaire 8.

Le système optique 4, disposé dans l'enveloppe 6, comprend un jeu de lentilles 9, 10 positionnées par des bagues-entretoises successives 11, 12, 13. Ces dernières sont reçues dans un lamage intérieur 14 de l'enveloppe 6. L'entretoise avant 11 bute sur l'épaulement d'extrémité aval de ce lamage, et l'empilement des lentilles et des entretoises est maintenu par une bague 15 vissée à l'extrémité amont du même lamage. L'extrémité d'une fibre optique 16 véhiculant le faisceau laser est positionnée sur l'axe de la tête 1, en amont de la bague 15, par des moyens appropriés non représentés.

Le miroir 17 de renvoi du faisceau laser est disposé en aval de l'ensemble 9 à 13. Il présente une face active 18 à 45° permettant de faire sortir le faisceau par la fenêtre 5 et de le focaliser sur la zone à souder, à la jonction des deux tubes 2 et 3.

L'enveloppe 7 comporte, au droit de la face 18, un décrochement annulaire 19 formant une gorge annulaire délimitée par deux épaulements radiaux. Les deux enveloppes 6 et 7 sont reliées entre elles, dans la région médiane de cette gorge, par un collet cylidrique 21 qui constitue la fenêtre 5 et dont l'axe est radial par rapport à la tête 1 et est contenu dans le plan médian du décrochement 19. Par rapport à la fenêtre 5, l'intervalle annulaire 8 comporte ainsi une partie amont 8A et une partie aval 8B qui communiquent entre elles. La partie 8B est obturée vers l'aval par des moyens non représentés.

Deux orifices 22 sont percés obliquement aux extrémités respectives de la gorge 19, symétriquement par rapport au collet 21 et dans un même plan diamétral de celui-ci. Ainsi, chaque orifice communique avec l'intervalle annulaire 8, respectivement avec les parties 8A et 8B de celui-ci, et est dirigé sensiblement vers le point d'impact du faisceau laser.

En service, un premier flux de gaz est envoyé dans l'intérieur de la tête de travail jusqu'au miroir 17, via des encoches périphériques 24 ménagées dans les lentilles 9 et 10, et sort de la tête 1 vers la zone de travail par la fenêtre 5.

De plus, l'extrémité amont de l'intervalle 8A est reliée à une source d'un deuxième flux de gaz, lequel emplit les parties 8A et 8B de cet intervalle et en sort par les orifices 22 sous la forme de deux jets inclinés qui convergent symétriquement sur la zone de travail. Les deux flux de gaz peuvent notamment provenir d'une même source et être constitués par un gaz neutre tel que l'argon, l'hélium ou l'azote, contenant éventuellement une faible proportion, par exemple de l'ordre du %, d'un gaz actif tel que l'oxygène ou l'hydrogène.

Ainsi, la zone de travail est abondamment alimentée par du gaz qui forme un matelas relativement épais entre la tête 1 et la zone de travail. De cette façon, le gaz non seulement protège le bain de fusion de l'oxydation, mais encore assure une protection améliorée de la tête de travail contre l'échauffement provoqué par le métal en fusion et contre les projections. Il en résulte finalement une augmentation de la durée de vie de l'outillage et une amélioration de la qualité, de la fiabilité et de la reproductibilité des soudures.

## Revendications

1. Procédé de travail au laser dans un tube, du type dans lequel on envoie un gaz dans la zone de travail à travers la tête de travail (1), caractérisé en ce qu'on crée, dans la région de la zone de travail, un matelas gazeux dont l'épaisseur est supérieure à l'intervalle qui existe entre la tête de travail (1) et le tube (2, 3) en dehors de cette zone.

2. Procédé suivant la revendication 1, caractérisé en ce qu'on fait parvenir le gaz dans la zone de travail suivant au moins deux courants provenant de points (22) situés de part et d'autre de cette zone et convergeant vers elle.

3. Procédé suivant la revendication 2, caractérisé en ce que les deux points (22) sont situés l'un en amont, l'autre en aval de la zone de travail.

4. Tête de travail au laser dans un tube, du type comprenant des moyens pour véhiculer un flux de gaz jusque dans la zone de travail, caractérisée en ce que l'enveloppe extérieure (7) de la tête (1) présente un décrochement (19) dans la région de la fenêtre (5) de sortie du faisceau laser.

5. Tête de travail au laser suivant la revendication 4, caractérisée en ce que le décrochement (19) est annulaire.

6. Tête de travail suivant l'une des revendications 4 ou 5, caractérisée en ce que lesdits moyens comprennent au moins deux orifices de sortie (22) situés de part et d'autre de ladite fenêtre (5) et orientés vers ladite zone.

7. Tête de travail au laser suivant la revendication 6, caractérisée en ce que les deux orifices (22) sont situés l'un à l'amont, l'autre à l'aval de ladite fenêtre (5).

8. Tête de travail au laser suivant l'une des revendications 6 ou 7, caractérisée en ce qu'elle comporte une double enveloppe (6, 7) qui définit un intervalle annulaire (8) continu s'étendant en amont (8A) et en aval (8B) de ladite fenêtre (5), lesdits orifices (22) communiquant avec cet intervalle annulaire, et des moyens d'alimentation en gaz de l'intervalle annulaire.

9. Tête de travail au laser suivant l'une quelconque des revendications 6 à 8, caractérisée en ce qu'elle comporte des moyens pour véhiculer un autre flux de gaz jusqu'au miroir (17) de renvoi du faisceau laser et à travers ladite fenêtre (5).

10. Tête de travail au laser suivant l'une quelconque des revendications 6 à 9, caractérisée en ce que les orifices de sortie (22) débouchent dans le décrochement (19).

## Patentansprüche

1. Laser-Arbeitsverfahren innerhalb eines Rohrs, bei dem durch den Arbeitskopf (1) ein Gas in die Arbeitszone geleitet wird, dadurch gekennzeichnet, daß im Bereich der Arbeitszone ein Gaskissen erzeugt wird, dessen Dicke größer als der Zwischenraum ist, der zwischen dem Arbeitskopf (1) und dem Rohr (2, 3) außerhalb dieser Zone besteht.

2. Verfahren nach Anspruch 1, dadurch gekennzeichnet, daß man das Gas in die Arbeitszone in wenigstens zwei Strömen zutreten läßt, die von Punkten (22) kommen die zu beiden Seiten dieser Zzone gelegen sind und auf diese zu konvergieren.

3. Verfahren nach Anspruch 2, dadurch gekennzeichnet, daß die beiden Punkte (22) bzgl. der Arbeitszone eingangsseitig bzw. ausgangsseitig gelegen sind.

4. Laser-Arbeitskopf in einem Rohr, der Mittel zur Beförderung eines Gasstroms bis in die Arbeitszone umfaßt, dadurch gekennzeichnet, daß der äußere Mantel (7) des Kopfs (1) im Bereich des Fensters (5) zum Austritt des Laserstrahls einen abgesetzten Bereich (19) besitzt.

5. Laser-Arbeitskopf nach Anspruch 4, dadurch gekennzeichnet, daß der abgesetzte Bereich (19) ringförmig ist.

6. Laser-Arbeitskopf nach einem der Ansprüche 4 oder 5, dadurch gekennzeichnet, daß diese Mittel wenigstens zwei Austrittsöffnungen (22) umfassen, die zu beiden Seiten dieses Fensters (5) gelegen sind und auf diese Zone zu gerichtet sind.

7. Laser-Arbeitskopf nach Anspruch 6 dadurch gekennzeichnet, daß die beiden Öffnungen (22) bzgl. des Fensters (5) eingangsseitig bzw. ausgangsseitig gelegen sind.

8. Laser-Arbeitskopf nach einem der Ansprüche 6 oder 7, dadurch gekennzeichnet, daß er einen doppelten Mantel (6, 7), der einen durchgehenden ringförmigen Zwischenraum (8) abgrenzt, der sich bzgl. des Fensters (5) eingangsseitig (8A) und ausgangsseitig (8B) erstreckt, wobei diese Öffnungen (22) mit diesem ringförmigen Zwischenraum verbunden sind, und Mittel zur Versorgung des ringförmigen Zwischenraums mit Gas besitzt.

9. Laser-Arbeitskopf nach einem der Ansprüche 6 bis 8, dadurch gekennzeichnet, daß er Mittel zur Beförderung eines anderen Gasstroms bis zu dem den Laserstrahl umlenkenden Spiegel (17) und durch dieses Fenster (5) besitzt.

10. Laser-Arbeitskopf nach einem der Ansprüche 6 bis 9, dadurch gekennzeichnet, daß die Austrittsöffnungen (22) in den abgesetzten Bereich (19) münden.

## Claims

1. Laser working procedure within a tube, wherein a gas is fed into the work zone across the working head (1), characterised in that a cushion of gas is Created in the area of the work zone, the thickness of which is greater than the space existing between said working head (1) and said tube (2, 3) outside said zone.

2. Procedure according to Claim 1, characterised in that the gas is fed into the work zone in at least two streams from points (22) located in one section or other of said zone and converging towards said zone.

3. Procedure according to Claim 2, characterised in that one of the two points (22) is located upstream and the other downstream of said work zone.

4. Laser working head within a tube, comprising means to supply a flow of gas into the work zone, characterised in that the external casing (7) of the working head (1) has a recess (19) in the area of the outlet opening (5) for the laser beam.

5. Laser working head according to Claim 4, characterised in that the recess (19) is ring-shaped.

6. Laser working head according to one of Claims 4 or 5, characterised in that said means comprise at least two outlet points (22) located on one section or other of said opening (5) and facing said work zone.

7. Laser working head according to Claim 6, characterised in that one of said two outlet points (22) is located upstream and the other downstream of said opening (5).

8. Laser working head according to one of Claims 6 or 7, characterised in that it comprises a double casing (6, 7) which defines a continuous annular space (8), which extends upstream (8A) and downstream (8B) of said opening (5), said outlets (22) adjoining said annular space, and with means for supplying the gas from the annular space.

9. Laser working head according to any one of Claims 6 to 8, characterised in that it comprises means to supply another gas flow to the return-beam mirror (17) and across said opening (5).

10. Laser working head according to one of Claims 6 to 9, characterised in that the outlets (22) feed into the recess (19).
